# EUROPÄISCHE PATENTANMELDUNG

(11) **EP 1 107 402 A2**
(43) Veröffentlichungstag der Anmeldung: **13.06.2001**
(21) Anmeldenummer: 00126674.1
(22) Anmeldetag: 05.12.2000
(51) Int. Cl.: H01S 3/04, F25D 17/02, F25B 41/04

(54) **Kühlvorrichtung für einen Laser**

(30) Priorität: 09.12.1999 DE 29921647 U
(71) Anmelder: Termotek AG, 76437 Rastatt (DE)
(72) Erfinder: Domnick, Frank, 67660 Schwabwiller (FR)
(74) Vertreter: Lasch, Hartmut Dipl.-Ing.

(57) **Zusammenfassung**

Eine Kühlvorrichtung für einen Laser (L) umfaßt einen Behälter (11) für Kühlflüssigkeit (12), eine von dem Behälter zu dem Laser (L) führende Vorlaufleitung (22), in der eine Pumpe (29) angeordnet ist, eine von dem Laser (L) zu dem Behälter führende Rücklaufleitung (23) und eine Temperiervorrichtung (20) für die im Behälter (11) befindliche Kühlflüssigkeit (12). Dabei ist vorgesehen, daß die Rücklaufleitung (23) mit der Vorlaufleitung (22) über eine Bypassleitung (27) verbunden ist, in er ein steuerbares Ventil (26) angeordnet ist. Die Bypassleitung (27) kann vorzugsweise stromauf der Pumpe (29) in die Vorlaufleitung (22) münden.

## Beschreibung

Die Erfindung betrifft eine Kühlvorrichtung für einen Laser, mit einem Behälter für Kühlflüssigkeit, einer von dem Behälter zu dem Laser führenden Vorlaufleitung, in der eine Pumpe angeordnet ist, einer von dem Laser zu dem Behälter führenden Rücklaufleitung und einer Temperiervorrichtung für die im Behälter befindliche Kühlflüssigkeit.

In vielen Bereichen der Technik finden Laser Verwendung, um Energie bzw. Licht mit hoher Präzision auf eine gewünschte Stelle aufzubringen. Die Präzision eines Lasers hangt dabei von seiner Betriebstemperatur ab, da sich bei verändernder Betriebstemperatur auch die Emissionseigenschaften des Lasers ändern. Es ist deshalb notwendig und üblich, den Laser bei Betrieb auf eine vorbestimmte Temperatur von beispielsweise ca. 18° bis 20°C zu kühlen und auf dieser Temperatur zu halten. Zu diesem Zweck wird in der Regel eine Kühlvor. richtung verwendet, die einen Vorratsbehälter für eine Kühlflüssigkeit besitzt, die von dem Behälter mittels einer Pumpe über eine Vorlaufleitung zu dem Laser und von diesem über eine Rücklaufleitung zurück in den Behältter gefördert wird. Die Kühlflüssigkeit erwärmt sich beim Durchströmen des Lasers, weshalb dem Behälter eine Temperiervorrichtung zugeordnet ist, die dafür sorgen soll, daß die Kühlflüssigkeit in dem Behälter trotz der rückströmenden wärmeren Kühlflüssigkeit auf der vorbestimmten Temperatur gehalten wird.

Die Temperiervorrichtung weist einen bekannten Aufbau mit einem geschlossenen Kühlkreislauf auf, in dem ein Kühlmittel zirkuliert, das aus einem gasförmigen Zustand mittels eines Kompressors in einen flüssigen Zustand gebracht wird und dann einen Kühl- oder Kondensatorblock durchströmt, in dem es einen wesentlichen Anteil der Wärme an die Umgebung abgibt und auf ca. 20°C abgekühlt wird. Das Kühlmittel durchströmt dann ein Expansionsventil, wodurch es in den gasförmigen Zustand überführt wird und auf ca. 10°C abkühlt. In dieser Form durchströmt das Kühlmittel einen Wärmetauscher, der innerhalb des Behälters angeordnet ist, wodurch die in diesem enthaltene Kühlflüssigkeit gekühlt wird.

Um die Temperatur der Kühlflüssigkeit innerhalb des Behälters möglichst konstant zu halten, ist innerhalb des Behälters ein Sensor angeordnet, der die Temperatur der Kühlflüssigkeit in dem Behälter erfaßt und ein entsprechendes Temperatursignal an eine Steuervorrichtung abgibt, die in Abhängigkeit von der festgestellten Temperatur den Kompressor an- oder abschaltet. Es hat sich gezeigt, daß mit einer derartigen Temperatursteuerung einige Nachteile verbunden sind.

Einerseits ist die genannte Steuerung relativ träge, d.h. es dauert lange, bis durch Anschalten des Kompressors eine nennenswerte Änderung der Temperatur der Kühlflüssigkeit in dem Behälter auftritt. Darüber hinaus ergeben sich relativ große Temperaturschwankungen, so daß an dem zu kühlenden Laser eine gewünschte Temperatur nur mit einer Genauigkeit von ± 0,5°c erreicht werden kann. Andererseits unterliegt der Kompressor durch das ständige An- und Abschalten einer hohen Belastung, wodurch seine Standzeit wesentlich verringert ist.

In Abwandlung des genannten Aufbaus der Temperiervorrichtung ist deshalb versucht worden, den Kompressor im wesentlichen kontinuierlich laufen zu lassen und die dadurch gegebene übermäßige Kühlung des Kühlmittels auszugleichen, indem der Kühl- oder Kondensatorblock und das Expansionsventil über eine Zweigleitung bei Bedarf überbrückt werden. In der Zweigleitung ist ein von der genannten Steuervorrichtung gesteuertes Ventil angeordnet, das die Zweigleitung wahlweise freigibt oder verschließt. Bei geschlossener Zweigleitung stellt sich der oben beschriebene Kühlmittelkreislauf ein. Wenn der Sensor in dem Behälter ein Absinken der Temperatur der im Behälter befindlichen Kühlflüssigkeit unterhalb eines Grenzwertes feststellt, wird die Zweigleitung durch ein Signal der Steuervorrichtung geöffnet, so daß das warme Kühlmittel durch die Zweigleitung direkt dem Wärmetauscher der Temperiervorrichtung zugeleitet wird, ohne daß es in dem Kondensatorblock sowie durch Expansion in dem Expansionsventil abgekühlt wird. Auf diese Weise ist zwar ein ständiges An- und Abschalten des Kompressors vermieden, jedoch weist auch diese Ausgestaltung ein träges Ansprechverhalten auf, da das warme Kühlmittel nach Öffnen der Zweigleitung relativ lange benötigt, um in den Wärmetauscher des Behälters zu gelangen. Darüber hinaus ist mit dieser Ausgestaltung die Gefahr verbunden, daß der Kompressor mit flüssigem statt mit gasförmigen Kühlmittel versorgt wird, wodurch der Kompressor beschädigt oder sogar zerstört werden kann.

In einer weiteren Ausgestaltung der Temperiervorrichtung ist es bekannt, den Kompressor kontinuierlich zu betreiben und die dabei gegebenenfalls auftretende übermäßige Kühlung der im Behälter enthaltenen Kühlflüssigkeit über eine spezielle elektrische Heizvorrichtung auszugleichen, die ebenfalls im Behälter angeordnet ist. Wenn die Steuervorrichtung über den Sensor ein übermäßiges Absinken der Temperatur der im Behälter befindlichen Kühlflüssigkeit feststellt, steuert sie die Heizvorrichtung an, die eine relativ hohe Leistungsaufnahme von beispielsweise 1000 W besitzt. Die Heizvorrichtung erwärmt die Kühlflüssigkeit schnell wieder auf eine Temperatur oberhalb des Grenzwertes, woraufhin sie wieder abgeschaltet wird. Dieses Vorgehen hat sich als sehr wirkungsvoll erwiesen und besitzt den weiteren Vorteil, daß der Kompressor kontinuierlich laufen kann und lediglich die Heizvorrichtung ständig an- und abgeschaltet wird. Jedoch ist der Energieverbrauch dieser Vorrichtung sehr hoch, so daß die Kühlvorrichtung insgesamt hohe Betriebskosten mit sich bringt.

Der Erfindung liegt die Aufgabe zugrunde, eine Kühlvorrichtung der genannten Art zu schaffen, die in einfacher Weise eine kontinuierliche und genaue Kühlung des Lasers ermöglicht.

Diese Aufgabe wird erfindungsgemäß bei einer Kühlvorrichtung der genannten Art dadurch gelöst, daß die Rücklaufleitung mit der Vorlaufleitung über eine Bypassleitung verbunden ist, in der ein steuerbares Ventil angeordnet ist.

Während die bekannten Ausgestaltungen der Kühlvorrichtung immer darauf abzielen, die Temperatur der im Vorratsbehälter enthaltenen Kühlflüssigkeit möglichst konstant zu halten, geht die Erfindung einen anderen Weg, indem in den Strömungskreislauf der Kühlflüssigkeit zwischen dem Behälter und dem Laser eingegriffen wird. Wenn das Ventil der Bypassleitung geschlossen ist, wird die im Behälter befindliche Kühlflüssigkeit mittels der Pumpe über die Vorlaufleitung dem Laser zugeführt, kühlt diesen, wobei sie sich erwärmt, und strömt in der Rücklaufleitung in den Behälter zurück. Bei geöffneter Bypassleitung strömt die von dem Laser kommende Kühlflüssigkeit entweder teilweise oder vollständig durch die Bypassleitung direkt in die Vorlaufleitung, wobei die Bypassleitung vorzugsweise stromauf der Pumpe in die Vorlaufleitung mündet. Die vom Laser kommende und die Bypassleitung durchströmende Kühlflüssigkeit gelangt somit nicht in den Behälter und unterliegt keiner weiteren Kühlung. Auf diese Weise kann die in der Vorlaufleitung dem Laser zugeführte Kühlflüssigkeit entweder vollständig von der durch die Bypassleitung strömenden Kühlflüssigkeit gebildet oder in gewünschten Anteilen aus der kühleren Kühlflüssigkeit, die aus dem Behälter kommt, und der wärmeren Kühlflüssigkeit aus der Bypassleitung zusammengemischt sein.

Da erfindungsgemäß direkt in die Temperatur der dem Laser zugeführten Kühlflüssigkeit eingegriffen werden kann, ist ein sehr schnelles und somit präzises Ansprechverhalten der Kühlvorrichtung möglich. Es hat sich gezeigt, daß erfindungsgemäß die Temperatur der dem Laser zugeführten Kühlflüssigkeit mit einer Abweichung von nur ± 0,1°C auf den gewünschten Wert eingestellt werden kann.

Das in der Bypassleitung angeordnete, steuerbare Ventil kann entweder ein Absperrventil sein, das wahlweise offen oder geschlossen ist, vorzugsweise ist jedoch vorgesehen, das Ventil als Proportionalventil auszugestalten, dessen Durchflußquerschnitt stufenlos veränderbar ist. Auf diese Weise ist es möglich, die dem Laser zugeführte Kühlflüssigkeit in beliebigem Verhältnis aus wärmeren und kälteren Kühlflüssigkeitsanteilen zusammenzumischen.

Um die Temperatur der dem Laser zugeführten Kühlflüssigkeit konstant zu halten, ist vorzugsweise in der Vorlaufleitung ein Sensor angeordnet, mittels dessen die Temperatur der Kühlflüssigkeit erfaßt wird. Der Sensor gibt an eine Steuervorrichtung ein entsprechendes Temperatursignal ab. Wenn die festgestellte Temperatur der Kühlflüssigkeit in der Vorlaufleitung außerhalb eines Soll-Bereichs liegt, steuert die Steuervorrichtung das Ventil der Bypassleitung entsprechend an, wodurch der Anteil an wärmerer Kühlflüssigkeit, die durch die Bypassleitung der aus dem Behälter kommenden kühleren Kühlflüssigkeit zugemischt wird, entsprechend erhöht oder verringert wird.

Um einen möglichst genauen Wert der Temperatur der dem Laser zugeführten Kühlflüssigkeit zu erhalten, sollte der Sensor in der Vorlaufleitung nahe dem Laser angeordnet sein.

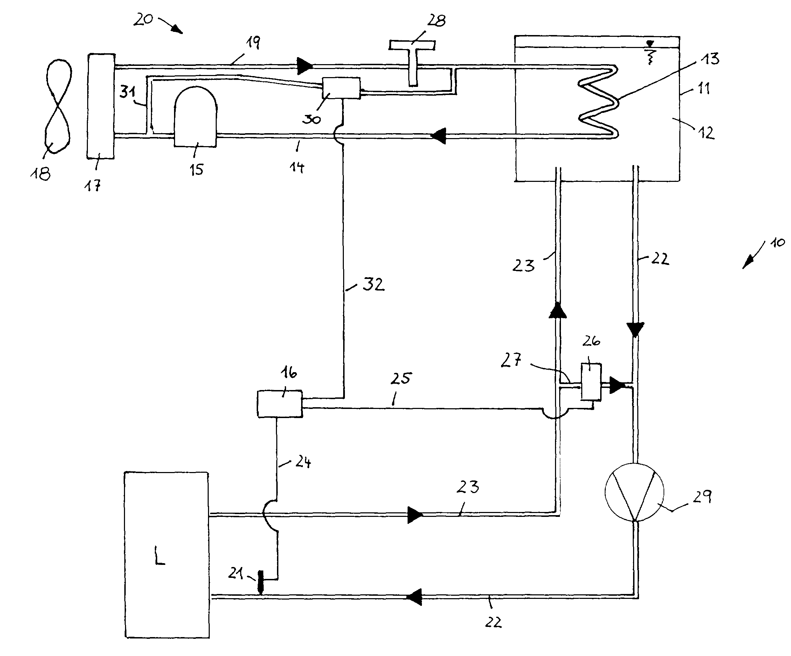

Weitere Einzelheiten und Merkmale der Erfindung sind aus der folgenden Beschreibung eines Ausführungsbeispiels unter Bezugnahme auf die Zeichnung ersichtlich, wobei die einzige Figur eine schematische Darstellung der erfindungsgemäßen Kühlvorrichtung zeigt.

Eine in der Figur dargestellte Kühlvorrichtung 10 zur Kühlung eines nur schematisch angedeuteten Lasers L besitzt einen Behälter 11, in dem eine Kühlflüssigkeit 12, beispielsweise de ionisiertes Wasser, enthalten ist. Von dem Behälter 11 führt eine Vorlaufleitung 22 zu dem Laser I,, in der eine Pumpe 29 angeordnet ist, die für eine Förderung der Kühlflüssigkeit 12 aus dem Behälter 11 zu dem Laser L sorgt. Von dem Laser L führt zu dem Behälter 11 eine Rücklaufleitung 23 zurück, so daß ein geschlossener Kühlkreislauf gebildet ist. Die Rücklaufleitung 23 ist über eine Bypassleitung 27 mit der Vorlaufleitung 22 verbunden, wobei die Bypassleitung 27 stromauf der Pumpe 29 in die Vorlaufleitung 22 mündet. In der Bypassleitung 27 ist ein Ventil 26 angeordnet, bei dem es sich vorzugsweise um ein Proportionalventil handelt.

In der Vorlaufleitung 22 ist nahe dem Laser L ein Sensor 21 angebracht, der die Temperatur der dem Laser zugeführten Kühlflüssigkeit erfaßt und über eine Leitung 24 ein entsprechendes Temperatursignal an eine Steuervorrichtung 16 abgibt, die in Abhängigkeit von dem Temperatursignal über eine Leitung 25 das Ventil 26 der Bypassleitung 27 ansteuern kann.

Um die in dem Behälter 11 befindliche Kühlflüssigkeit 12 auf einem vorbestimmten Temperaturwert zu halten, ist eine in ihrer Gesamtheit mit 20 bezeichnete Temperiervorrichtung vorgesehen. Die Temperiervorrichtung umfaßt einen Kühlkreislauf mit einer innerhalb des Behälters 13 liegenden, einen Wärmetauscher 13 bildenden Kühlschlange, die über eine Leitung 14, in der ein Kompressor 15 angeordnet ist, mit einem Kondensatorblock 17 verbunden ist, dem ein Gebläse 18 zugeordnet ist. Von dem Kondensatorblock 17 führt eine weitere Leitung 19 zurück zu dem Wärmetauscher 13, wobei in der Leitung 19 ein Expansionsventil 28 angeordnet ist. Der Kompressor 15 sorgt dafür, daß das in der Temperiervorrichtung 20 zirkulierende Kühlmittel unter Druck gesetzt und in flüssiger Form durch den Kondensatorblock 17 strömt. In dem Kondensatorblock 17 gibt das Kühlmittel einen großen Teil der Wärmeenergie an die Umgebung ab und strömt in abgekühlter, jedoch noch flüssiger Form in der Leitung 19 zu dem Expansionsventil 28. Das Expansionsventil 28 sorgt dafür, daß das Kühlmittel unter weiterer Abkühlung expandiert und gasförmig wird und in diesem Zustand den Wärmetauscher 13 durchströmt, in dem ein Wärmeaustausch zwischen der wärmeren Kühlflüssigkeit 12 in dem Behältnis 11 und dem kälteren, gasförmigen Kühlmittel in der Temperiervorrichtung 20 erfolgt. Nach Durchströmen des Wärmetauschers 13 strömt das Kühlmittel in erwärmter, jedoch noch gasförmiger Form zu dem Kompressor 15, woraufhin der beschriebene Zyklus erneut abläuft.

Stromab des Kompressors 15, d.h. zwischen dem Kompressor 15 und dem Kondensatorblock 17 zweigt eine Umgehungsleitung 31 ab, die stromab des Expansionsventils 28 in der Leitung 19 mündet. In der Umgehungsleitung 31 ist ein Sperrventil 30 angeordnet, das über eine Steuerleitung 32 von der Steuervorrichtung 16 ansteuerbar ist.

Bei geschlossenem Ventil 26 der Bypassleitung 27 erfolgt die Kühlung des Lasers L über die Zuführung von Kühlflüssigkeit aus dem Behälter 11 über die Vorlaufleitung 22 und die Rückführung über die Rücklaufleitung 23. Wenn die Steuervorrichtung 16 über den Sensor 21 feststellt, daß die Temperatur der Kühlflüssigkeit in der Vorlaufleitung 22 zu gering ist, wird in Abhängigkeit von der festgestellten Abweichung von dem Sollwert das Ventil 26 der Bypassleitung 27 angesteuert und zumindest teilweise geöffnet. Dadurch strömt zumindest ein Teil der von dem Laser L zu dem Behältnis 11 zurückströmenden, erwärmten Kühlflüssigkeit durch die Bypassleitung 27 direkt in die Vorlaufleitung 22 und durchmischt sich dort mit der aus dem Behältnis 11 über die Vorlaufleitung 22 zugeführten Kühlflüssigkeit. Je gröβer der Durchflußquerschnitt des Ventils 26 der Bypassleitung 27 ist, desto größer ist auch der Anteil der wärmeren Kühlflüssigkeit an der Mischung, wodurch die Temperatur der dem Laser L zugeführten Kühlflüssigkeit entsprechend angehoben ist. Da die Wege zwischen dem Laser L, dem Sensor 21 und der Bypassleitung 27 relativ kurz sind, ergeben sich sehr schnelle Reaktionszeiten für die Ansteuerung der erfindungsgemäßen Kühlvorrichtung und die Temperatur der dem Laser L zugeführten Kühlflüssigkeit läßt sich mit einer Genauigkeit von ± 0,1°C konstant halten.

Wenn der Laser L nicht in Betrieb ist, erfolgt keine Erwärmung der in der Vorlaufleitung 22 und der Rücklaufleitung 23 zirkulierenden Kühlflüssigkeit 12, die jedoch gleichzeitig in dem Behälter 11 gekühlt wird. Dies kann dazu führen, daß die Kühlflüssigkeit 12 zu kalt wird. Dabei ist vorgesehen, daß die Steuervorrichtung 16 das Sperrventil 30 der Umgehungsleitung 31 öffnet, wenn die Temperatur der Kühlflüssigkeit 12 unterhalb eines vorbestimmten Grenzwertes liegt. Bei geöffnetem Sperrventil 30 strömt das Kühlmittel von dem Kompressor 15 teilweise oder vollständig unter Umgehung des Kondensatorblocks 17 und des Expansionsventils 28 durch die Umgehungsleitung 31 direkt in die Leitung 19, so daß es keiner Kühlung unterliegt. Dadurch erfolgt in dem Behälter 11 keine weitere Kühlung der Kühlflüssigkeit 12. Wenn die im Behälter 11 befindliche Kühlflüssigkeit 12 sich wieder auf eine Temperatur oberhalb des Grenzwertes erwärmt, wird das Sperrventil 30 von der Steuervorrichtung 16 wieder geschlossen. Auf diese Weise kann die Kühlflüssigkeit 12 auch bei abgeschaltetem Laser mit hoher Genauigkeit in einen vorbestimmten Temperaturbereich gehalten werden.

## Patentansprüche

1. Kühlvorrichtung für einen Laser (L), mit einem Behälter (11) für Kühlflüssigkeit (12) , einer von dem Behälter (11) zu dem Laser (L) führenden Vorlaufleitung (22), in der eine Pumpe (29) angeordnet ist, einer von dem Laser (L) zu dem Behälter (11) führenden Rücklauf. leitung (23) und einer Temperiervorrichtung (20) für die im Behälter (11) befindliche Kiihlflüssigkeit (12), dadurch gekennzeichnet, daß die Riicklaufleitung (23) mit der Vorlaufleitung (22) über eine Bypassleitung (27) verbunden ist, in der ein steuerbares Ventil (26) angeordnet ist.

2. Kühlvorrichtung nach Anspruch 1, dadurch gekennzeichnet, daß die Bypassleitung (27) stromauf der Pumpe (29) in die Vorlaufleitung (22) mündet.

3. Kühlvorrichtung nach Anpruch 1 oder 2, dadurch gekennzeichnet, daß das Ventil (26) ein Absperrventil ist.

4. Kühlvorrichtung nach Anspruch 1 oder 2, dadurch gekennzeichnet, daß das Ventil (26) ein Proportionalventil ist.

5. Kühlvorrichtung nach einem der Ansprüche 1 bis 4, dadurch gekennzeichnet, daß in der Vorlaufleitung (22) ein Sensor (21) angeordnet ist, mittels dessen die Temperatur der Kühlflüssigkeit erfaßbar ist, und daß der Sensor (21) an eine Steuervorrichtung (16) ein Temperatursignal abgibt, in Abhängigkeit von dem die Steuervorrichtung (16) das Ventil (26) ansteuert.

6. Kühlvorrichtung nach Anspruch 5, dadurch gekennzeichnet, daß der Sensor (21) nahe dem Laser (L) angeordnet ist.
